# EUROPEAN PATENT APPLICATION

(11) **EP 4 458 644 A1**
(43) Date of publication of application: **06.11.2024**
(21) Application number: 22915476.0
(22) Date of filing: 19.10.2022
(51) Int. Cl.: B61L 23/14, B60L 3/00, B60L 15/40, B61L 3/16

(54) **TRAIN CONTROL SYSTEM, ONBOARD CONTROL DEVICE, AND TRAIN CONTROL METHOD**

(30) Priority: 27.12.2021 JP 2021213131
(71) Applicant: Hitachi, Ltd., Tokyo 100-8280 (JP)
(72) Inventor: HATTORI, Taishi, Tokyo 100-8280 (JP); HAYASHI, Masaki, Tokyo 100-8280 (JP)
(74) Representative: MERH-IP Matias Erny Reichl Hoffmann Patentanwälte PartG mbB
(86) International application number: PCT/JP2022/038959
(87) International publication number: WO 2023/127241

(57) **Abstract**

In a train control system, an onboard control device includes an onboard control portion. The onboard control portion transmits the current position of a train to a ground control device and receives, from the ground control device, a travelable route for the train based on the current position and a travel-permitting position indicating a position enabling the train to travel within the travelable route. The onboard control portion controls the train to maintain a speed lower than or equal to a predetermined limit based on an operation pattern indicating a control pattern of the train referring to the travel-permitting position. The ground control device includes a ground control portion that calculates a travelable route and a travel-permitting position based on the current position received from the onboard control device and transmits the calculated travelable route and travel-permitting position to the onboard control device. The onboard control portion calculates a failure rate, namely, a ratio of failed brake devices to the brake devices mounted on the train, and controls the train to maintain a speed lower than or equal to an abnormal-state speed limit, namely, a speed calculated based on the failure rate and a normal-state speed limit as a speed limit for the train when all the brake devices are normal.

## Description

### Technical Field

The present invention relates to a train control system, an onboard control device, and a train control method.

### Background Art

The train group control system is considered as method of efficiently operating trains. The train group control system supplies a train with operational targets such as the target time to arrive at the next station and allows the train to travel according to the supplied targets. This system is known as an ATO (Automatic Train Operation) system.

The ATO system controls the speed of a train to achieve the operational target when determining that the train causes a delay in the train schedule. In the ATO system, the traffic control system supplies the train with targets such as time, position, and speed, or when, where, and how fast the train should arrive. The train supplied with the targets regenerates a target run curve and provides speed control to achieve the operational target. It is assumed that trains can normally decelerate and stop.

As described in patent literature 1, the brake device for railroad vehicles includes a pneumatic or electro-pneumatic friction brake as a directly or indirectly acting brake. The brake control device may additionally include a dynamic brake and identifies a difference between the braking distance detected during braking for a stop and the braking distance expected during the same. When the difference exceeds a predetermined difference, the brake device limits the travel speed to a predetermined maximum speed at least to allow the railroad vehicle to travel after the braking for a stop. This limited maximum speed is specified to be lower than the maximum speed reachable for the railroad vehicle or lower than the maximum speed permitted for the section where the railroad vehicle is currently traveling.

### Citation List

### Patent Literature

Patent Literature 1: Japanese Patent No. 6261521

### Summary of Invention

### Technical Problem

Suppose an automatically operated train suffers a failure in the brake device of the train but continues traveling like no failure occurrence. In this case, the braking distance may be extended to exceed a travel-permitting position. Suppose the train is not allowed to travel when the brake device of the train fails. In this case, a driver may go to the train and take time to start traveling the train, causing significant disruption to train services.

As described in patent literature 1, the actual and predicted braking distances are compared. When the actual braking distance exceeds the predicted braking distance, the maximum speed is limited on a train that will travel afterward. An appropriate maximum speed cannot be specified for the train that then may not be able to stop up to the predetermined position. The actual braking distance determines the maximum speed. The maximum speed varies with braking force changes caused by mechanical or electrical tolerances. The actual braking distance does not necessarily fall below the predicted braking distance even if the maximum speed is specified for the train that will travel afterward.

Patent literature 1 is unlikely to specify the maximum speed at which the train can stop up to a predetermined position. It is difficult for the train to stop up to the predetermined position if the train travels while the brake fails. When the brakes fail, the train cannot run automatically, causing significant disruption to train services.

The present invention has been made in consideration of the foregoing. It is an object of the invention to reduce the impact of disruption to train services when a brake device of the train fails.

### Solution to Problem

To solve the above problems, one aspect of the present invention provides a train control system including an onboard control device that is mounted on a train moving on a track and controls the train; and a ground control device that is placed on the ground and controls the train along with the onboard control device. The onboard control device and the ground control device can cooperate via intercommunication. The onboard control device includes a position acquisition portion and an onboard control portion. The position acquisition portion acquires a current position of the train. The onboard control portion transmits the current position of the train acquired by the position acquisition portion to the ground control device and receives, from the ground control device, a travelable route of the train based on the current position and a travel-permitting position indicating a position enabling the train to travel within the travelable route. The onboard control portion controls the train to maintain a speed lower than or equal to a predetermined limit based on an operation pattern indicating a control pattern of the train referring to the travel-permitting position. The ground control device includes a ground control portion that receives the current position from the onboard control device, calculates the travelable route based on the current position and the travel-permitting position, and transmits the travel-permitting position to the onboard control device. The onboard control portion monitors states of brake devices installed on the train, calculates a failure rate, namely, a ratio of failed brake devices to the brake devices, and controls the train to maintain a speed lower than or equal to an abnormal-state speed limit, namely, a speed calculated based on the failure rate and a normal-state speed limit as a speed limit for the train when all the brake devices are normal.

### Advantageous Effects of Invention

The present invention can reduce the impact of disruption to train services when a brake device of the train fails.

### Brief Description of Drawings

FIG. 1 illustrates a train control system according to an embodiment;
FIG. 2 illustrates the relationship among a train, a travelable route, a travel-permitting position, a normal-brake operation pattern at the brake device, and a failed-brake operation pattern at the brake device when the train stops at a station,
FIG. 3 illustrates the transmission and reception of information between a ground control device and multiple trains including a train that transmits failure information;
FIG. 4 is a flowchart illustrating an example of an automatic driving process procedure of an onboard control device;
FIG. 5 is a flowchart illustrating an example of an information transmission procedure from the ground control device to the onboard control device when the ground control device receives information indicating an occurrence of brake device failure;
FIG. 6 is a flowchart illustrating an example of the information transmission procedure from the ground control device to the onboard control device of a train that transmitted information indicating an occurrence of brake device failure;
FIG. 7 is a flowchart illustrating an example of the information transmission procedure from the ground control device to the onboard control device of a preceding train that foregoes the train having transmitted the information indicating an occurrence of brake device failure;
FIG. 8 is a flowchart illustrating an example of the information transmission procedure from the ground control device to the onboard control device of a subsequent train that follows the train having transmitted the information indicating an occurrence of brake device failure; and
FIG. 9 is a flowchart illustrating an example of the information transmission process procedure from the ground control device to the onboard control device of a train traveling a railroad section connected to the railroad section traveled by the train having transmitted the information indicating an occurrence of brake device failure.

### Description of Embodiments

The description below explains an embodiment of the present disclosure by reference to the drawings. The present disclosure is not limited to the embodiment. The brake device illustrated in the drawings is not limited to a controller to issue a brake command but includes acting components such as valves and brake discs, for example.

The same parts are denoted by the same reference numerals in the drawings.

The positions, sizes, shapes, and ranges etc. of each components in the drawings may not indicate the actual position, size shape, range, etc. to facilitate understanding of the invention. For this reason, the present invention is not necessarily limited to the positions, sizes, shapes, and ranges, for example, disclosed in the drawings.

In the description below, the reference numeral suffixed with a sub-number distinguishes a component from the same components. The reference numeral with no sub-number collectively represents the component instead of distinguishing the component by using the sub-number.

### Embodiment

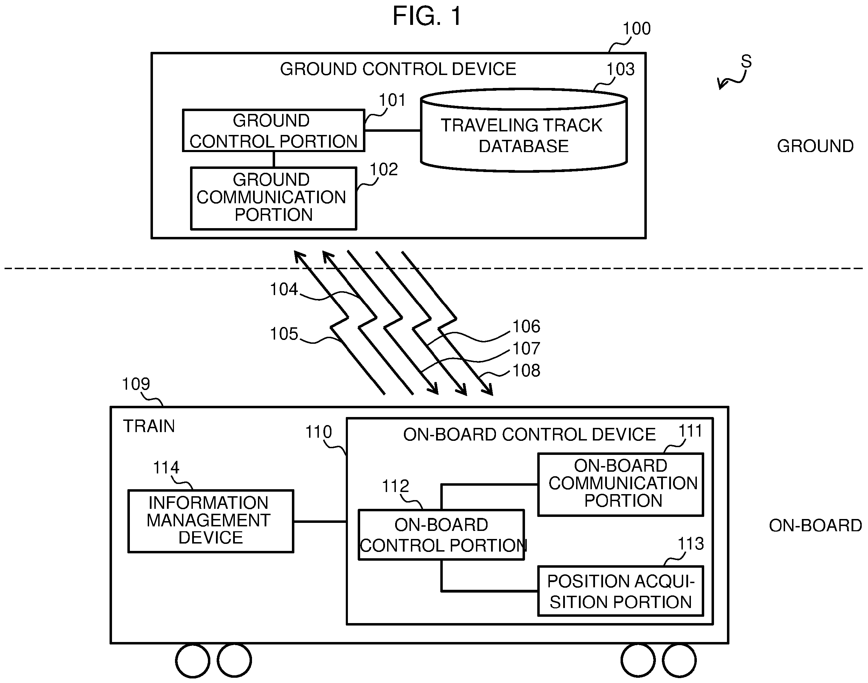

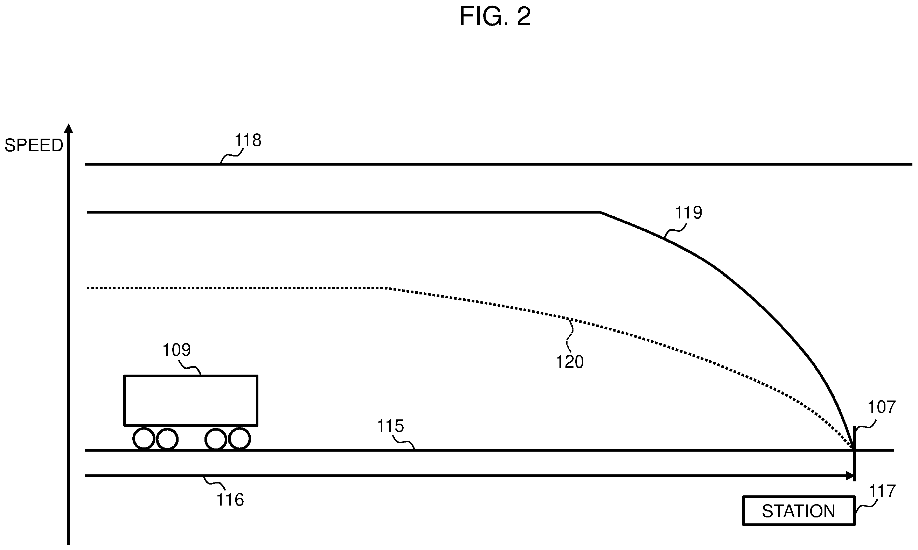

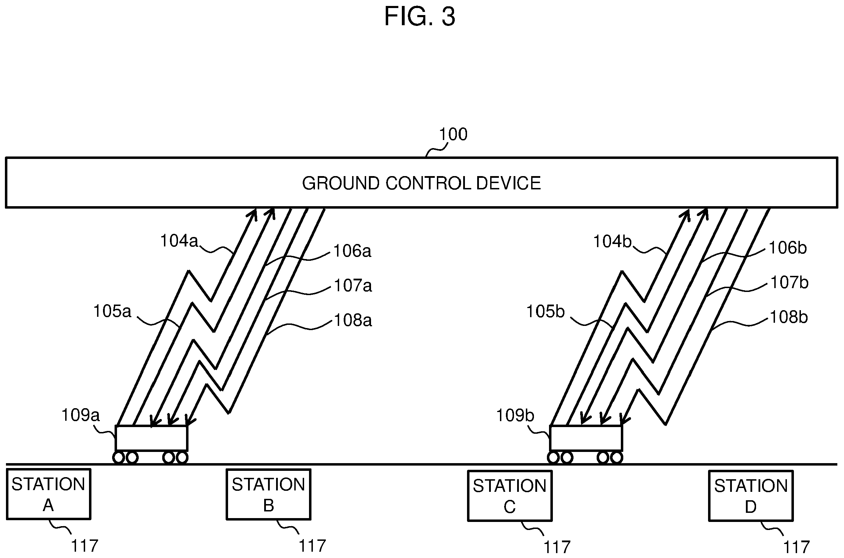

FIG. 1 is a diagram illustrating a train control system S according to the embodiment. FIG. 2 illustrates the relationship among a train 109, a travelable route 116, a travel-permitting position 107, a normal-brake operation pattern 119 at the brake device, and a failed-brake operation pattern 120 at the brake device when the train 109 stops at a station 117. FIG. 3 illustrates the transmission and reception of information between a ground control device 100 and multiple trains 109 including a train 109 that transmits failure information.

The train control system S includes the ground control device 100 and an onboard control device 110 mounted on the train 109 traveling a track 115.

The ground control device 100 includes a ground control portion 101, a ground communication portion 102, and a traveling track database 103. The ground control portion 101 calculates a travel-permitting position 107 indicating a travelable position within a travelable route 116 of the train 109, specifies a destination station 108 at which the train 109 will arrive, and calculates a driving pattern 106 for the train 109 to travel from the station 117 to the destination station 108.

The ground communication portion 102 transmits the information calculated by the ground control portion 101 to the onboard control device 110. The traveling track database 103 is a database to manage current positions 104 of the train 109.

The onboard control device 110 includes an onboard communication portion 111, an onboard control portion 112, and a position acquisition portion 113. The onboard communication portion 111 communicates with the ground control device 100. The onboard control portion 112 controls operations of the train 109 to satisfy a speed limit 118, a speed lower than the speed of 0 km/h at the travel-permitting position 107, and a speed lower than or equal to the speed limit based on the destination station 108 where the train 109 arrives, the travel-permitting position 107, and the operation pattern 106. The position acquisition portion 113 acquires current positions of the train 109.

The train 109 includes an information management device 114 that connects to various devices mounted on the vehicle, transmits and receives commands, and displays and records device failures.

When the brake device of the train 109 fails, the onboard control device 110 receives failure information on the brake device from the information management device 114. The onboard control device 110 calculates the ratio (failure rate) of the number of axles incapable of brake operations to the total number of axles of the train 109 and transmits failure information 105 including the failure rate of the brake device to the ground control device 100. The ratio of the number of axles capable of normal brake operations to the total number of axles of the train 109 is assumed to be a normal rate expressed as failure rate + normal rate = 1 (100%). The failure rate and the normal rate based on the number of axles are mere examples of calculating the failure rate and the normal rate of the brake device.

The onboard control device 110 operates the train 109 according to the operation pattern 106 received from the ground control device 100. It may be determined that the train 109 cannot travel based on the failure information 105 on the brake device. Then, the ground control device 100 transmits a stop command to the onboard control device 110. The onboard control device 110 generates brake output in response to the stop command to stop the train 109.

The ground control device 100 receives the failure information 105 on the brake device from the onboard control device 110 and identifies the train 109 (failed train) that transmitted the brake device failure information; the train 109 (preceding train) preceding the train 109 that transmitted the brake device failure information; the train 109 (subsequent train) following the train 109 that transmitted the brake device failure information; current positions of the train 109 (connection train) that travels a railroad section to connect for transfer or the like with the railroad section traveled by the train 109 that transmitted the brake device failure information; the destination station 108; the travel-permitting position 107; and the operation pattern 106.

The ground control device 100 then updates the destination station or travel-permitting position according to the current position or the ratio of brake device failures so that the train 109 (failed train) suffering brake device failure can reach the nearest station or a station adjacent to the rail yard at a safe speed.

The ground control device 100 determines whether the train 109 suffering brake device failure can travel. When the train can travel, the ground control device 100 calculates an abnormal-state speed limit and an abnormal-state brake force according to the failure rate (or normal rate). The abnormal -state speed limit is found by decreasing the speed limit (normal-state speed limit) when the vehicle brake device is normal. The abnormal-state brake force is found by decreasing the brake force (normal-state brake force) when the vehicle brake device is normal. The abnormal-state speed limit is calculated based on the normal-state speed limit and the normal rate and is found by multiplying the normal-state speed limit by the normal rate, for example. The abnormal-state brake force is calculated based on the normal-state brake force and the normal rate.

Then, the ground control device 100 uses the abnormal-state speed limit and the abnormal-state brake force to select available operation patterns from among the operation patterns previously registered in the database. The ground control device 100 determines an operation pattern that is included in the selected operation patterns and is most approximate to the operation pattern corresponding to the use of the normal-state speed limit and the normal-state brake force, thus minimizing delays due to brake failure. The ground control device 100 transmits the determined operation pattern along with the abnormal-state brake force to the onboard control device 110. The onboard control device 110 changes the vehicle braking force of the train from the normal-state brake force to the abnormal-state brake force. The onboard control device 110 changes the normal-state speed limit to the abnormal-state speed limit and controls the train to keep the abnormal-state speed limit or lower.

In terms of the train 109 (failed train) suffering brake device failure, the onboard control device 110 changes the normal operation pattern 119 for the travel-permitting position 107 to the failed-brake operation pattern 120 for the travel-permitting position 107 and changes the braking force of the vehicle to the abnormal-state brake force. Compared to the operation pattern 119, the operation pattern 120 suppresses the maximum speed in consideration of the brake device failure, starts deceleration earlier than normal referring to the travel-permitting position 107, and smoothly decreases the deceleration.

On the other hand, the ground control device 100 transmits the changed destination station 108, the travel-permitting position 107, and the operation pattern 106 to trains other than the train 109 suffering brake device failure in consideration of change in destination stations, interval adjustments, and connections for transfer.

The operation pattern 106 may be defined as an operation timetable until the destination station 108 is reached.

The control of each train 109 described below simultaneously updates the destination station 108 and the travel-permitting position 107. However, the train may be able to travel to the updated destination station 108 because of an idle operation interval referring to the preceding train, for example. In such a case, only the destination station 108 may be updated without updating the travel-permitting position 107.

The description below explains the operations of the train 109 (failed train) that transmitted the brake device failure information.

The ground control device 100 receives the failure information 105 on the brake device from the onboard control device 110 and then identifies the current position of the train 109 (failed train) that transmitted the failure information 105 on the brake device. The ground control device 100 uses data previously stored in the ground control device 100 to determine whether the train 109 (failed train) can travel, based on the failure rate or normal rate of the brake device of the train 109 (failed train). The train 109 (failed train) is determined to be incapable of travel when the normal rate of the brake device is smaller than a threshold, for example.

At the ground control device 100, The train 109 (failed train) may be able to continue traveling even after a brake device failure occurs. In this case, the ground control device 100 searches for the destination station 108 nearest to the current position where the train 109 (failed train) transmitted the failure information 105 on the brake device.

At the ground control device 100, the travel-permitting position 107 and destination station 108 identified by the train 109 (failed train) may not correspond to the destination station 108 nearest to the current position. In this case, the ground control device 100 transmits the travel-permitting position 107, the destination station 108, and the operation pattern 106 to the onboard control device 110 of the train 109 (failed train) to stop at the nearest destination station 108. In this case, the operation pattern 106 is selected based on the failure rate of the brake device to satisfy the maximum speed and deceleration capable of reliably controlling the train in the event of a brake device failure.

The ground control device 100 may provide deterrent arrangements for repair after the train 109 (failed train) suffering brake device failure stops at the destination station 108. The ground control device 100 may transmit a new travel-permitting position 107, destination station 108, or operation pattern 106 to the onboard control device 110 so that the train 109 (failed train) can reach the rail yard. The ground control device 100 may provide deterrent arrangements for repair if the train 109 suffers a brake device failure while stopping at the destination station 108.

The description below explains operations of the train 109 (preceding train) that foregoes the train 109 (failed train) suffering brake device failure. In the description, a train 109a (failed train) denotes the train suffering brake device failure in FIG. 3 and train 109b (preceding train) denotes the train that foregoes the train 109a.

The ground control device 100 identifies current position 104b, destination station 108b, travel-permitting position 107b, and operation pattern 106b of the train 109b (preceding train). The ground control device 100 then checks an increase in the operation interval referring to the train 109 (subsequent train) following the train 109a (failed train). It may be favorable to continue the current operation if the operation interval referring to the train 109 (subsequent train) does not increase at the ground control device 100. Then, the ground control device 100 does not update the destination station 108b, the travel-permitting position 107b, or the operation pattern 106b of the train 109b (preceding train).

If the operation interval referring to the train 109 (subsequent train) increases, the ground control device 100 checks for an update of the destination station 108 and the travel-permitting position 107 of the train 109 (subsequent train). The destination station 108 and travel-permitting position 107 of the train 109 (subsequent train) may not be updated. Then, the ground control device 100 updates only the operation pattern 106b of the train 109b (preceding train) to reduce the increase in the operation interval.

At the ground control device 100, the destination station 108 and the travel-permitting position 107 of the train 109 (subsequent train) may be updated. Then, the ground control device 100 checks whether the operation pattern 106 of the train 109 (subsequent train) is also updated. At ground control device 100, the operation pattern 106 of the train 109 (subsequent train) may not updated and the operation interval may not increase without changing the operation pattern 106b of the train 109b (preceding train). Then, the ground control device 100 updates only the destination station 108b and the travel-permitting position 107b of the train 109b (preceding train).

Not that, at the ground control device 100, the operation pattern 106 of train 109 (subsequent train) may be updated. Then, the ground control device 100 updates the destination station 108b, travel-permitting position 107b, and the operation pattern 106b of the train 109b (preceding train). However, it may be possible to reduce an increased operation interval for each train by stopping the train 109a (failed train) suffering brake device failure at the station 117, and adjusting operations of the train 109 following the train 109a (failed train). Then, there is no need to update the destination station 108, travel-permitting position 107, and the operation pattern 106 for the train 109 that precedes the train 109a (failed train).

The destination station 108b and the travel-permitting position 107b may be updated as follows. It may be favorable to stop the train at the destination station 108b originally scheduled to pass through for the convenience of passengers expected to increase at the station 117 due to the delay of the train 109a (failed train). Alternatively, it may be favorable to close the business operation based on operational changes and force the train as a deadhead train to pass through the destination station 108b where the train was originally scheduled to stop. In addition, it may be favorable to avoid transmitting the above-described destination station and travel-permitting position after the train stops at the destination station 108b. Instead, it may be favorable to shuttle the train 109b (preceding train) by transmitting the destination station and travel-permitting position in the direction opposite to the direction so far traveled.

Thus, the ground control device 100 can transmit appropriate commands to the train 109b preceding the train 109a suffering brake device failure, according to the operating situations of the subsequent train 109. It is possible to reduce the time required to resolve the train service disruption and alleviate congestion at stations based on flexible operational changes.

The description below explains the operations of the train 109 (subsequent train) that follows the train 109 (failed train) suffering brake device failure. In this case, as illustrated in FIG. 3, the train 109b (failed train) denotes the train 109 (failed train) suffering brake device failure, and the train 109a (subsequent train) denotes the subsequent train that follows the train 109b (failed train).

The ground control device 100 identifies the current position 104a, destination station 108a, travel-permitting position 107a, and the operation pattern 106a of the train 109a (subsequent train). The ground control device 100 confirms whether the train 109b (failed train) stops at the destination station 108 originally scheduled as the stop.

At the ground control device 100, the train 109a (subsequent train) may need to stop at the destination station 108 where the train 109b (failed train) was scheduled to stop but failed. Then, the ground control device 100 updates the destination station 108a and the travel-permitting position 107a for the train 109a (subsequent train) and forces the train 109a (subsequent train) to stop at the destination station 108 where the train 109b (failed train) did not stop. It may be necessary to change the operation timetable and adjust the operation interval. Then, the ground control device 100 also updates the operation pattern 106a for the train 109a (subsequent train). It may be unnecessary to adjust the operation interval during travel. Then, the ground control device 100 updates only the destination station 108a and the travel-permitting position 107a of the train 109a (subsequent train), and does not update the operation pattern 106a.

The train 109 (preceding train) preceding the train 109a (subsequent train) may close the business operation and deadhead due to an operation change, passing through the destination station 108 originally scheduled as the stop. In this case, the train 109 (preceding train) need not stop at the destination station 108. Therefore, the destination station 108a and the travel-permitting position 107a remain unchanged. However, the operation pattern 106a may be changed if the operation interval needs to be adjusted.

The train 109 (preceding train), which precedes the train 109a (subsequent train) and follows the train 109b (failed train), may stop at the destination station 108 where the train 109b (failed train) should stop as scheduled. In this case, the destination station 108 of the train 109a (subsequent train) need not be updated. However, the operation pattern 106a is updated according to the determination that the operation interval needs to be adjusted.

Concerning the train 109 (subsequent train) following the train 109b (failed train) suffering brake device failure, it may be favorable to update the destination station 108, the travel-permitting position 107, and the operation pattern 106 according to the expected operational situation, Alternatively, it may be favorable to close the business operation according to operational changes and allow the train 109 to pass through the destination station 108 originally scheduled as the stop. In addition, it may be favorable to avoid transmitting the above-described destination station 108 and travel-permitting position after the train stops at the destination station 108. Instead, it may be favorable to shuttle the train 109 (subsequent train) by transmitting the destination station and travel-permitting position 107 in the direction opposite to the direction so far traveled.

It may be possible to prevent the operation interval of each train 109 from increasing by deterring the train 109b (failed train) suffering brake device failure after stopping at the destination station 108b. In this case, it may be unnecessary to update the destination station 108, the travel-permitting position 107, and the operation pattern 106 of the train 109 (subsequent train) following the train 109b (failed train).

The ground control device 100 can transmit appropriate commands to the train 109a (subsequent train) following the train 109b (failed train) suffering brake device failure, according to the operational situations of the preceding train. It is possible to reduce the time required to resolve the train service disruption and alleviate congestion at stations based on flexible operational changes.

The description below explains the operations of the train 109 (connection train) traveling a railroad section (connecting railroad section) connected to the railroad section where the train 109 (failed train) suffering brake device failure travels.

The ground control device 100 recognizes current positions, the destination station 108, the travel-permitting position 107, the operation pattern 106, and connection schedule such as transfer of the train 109 (connection train) traveling the railroad section connected to the railroad section where the train 109 (failed train) suffering brake device failure travels. The train 109 (connection train) may be scheduled for connection and the connection may require updating the operation pattern 106 due to the delay caused by a brake device failure. In this case, it is necessary to update the operation pattern 106 of the train 109 (connection train).

The continued use of the current operation pattern 106 may decrease the connection time. Then, it may be favorable to determine whether to update the operation pattern 106, based on the connection time.

The use of the updated operation pattern 106 may disable the connection scheduled for the train 109 (connection train). Then, the operation pattern 106 for the train 109 (connection train) is not updated to prevent disruption to train services.

The train 109 (connection train) may not be scheduled for connection. Then, it may be favorable to determine whether to update the operation pattern 106 for the train 109 (connection train), based on the operation interval concerning the preceding or subsequent train referring to the train 109 (connection train), regardless of the operational situations of the railroad section to be connected.

In addition, it may be impossible to connect with the scheduled train 109 (failed train) even if the operation pattern 106 of the train 109 (connection train) is changed. Then, the operation pattern 106 of the train 109 not scheduled for connection may be changed to connect with the train 109 (failed train). It is possible to maximize connections to other railroad sections and reduce confusion caused by transfers, for example.

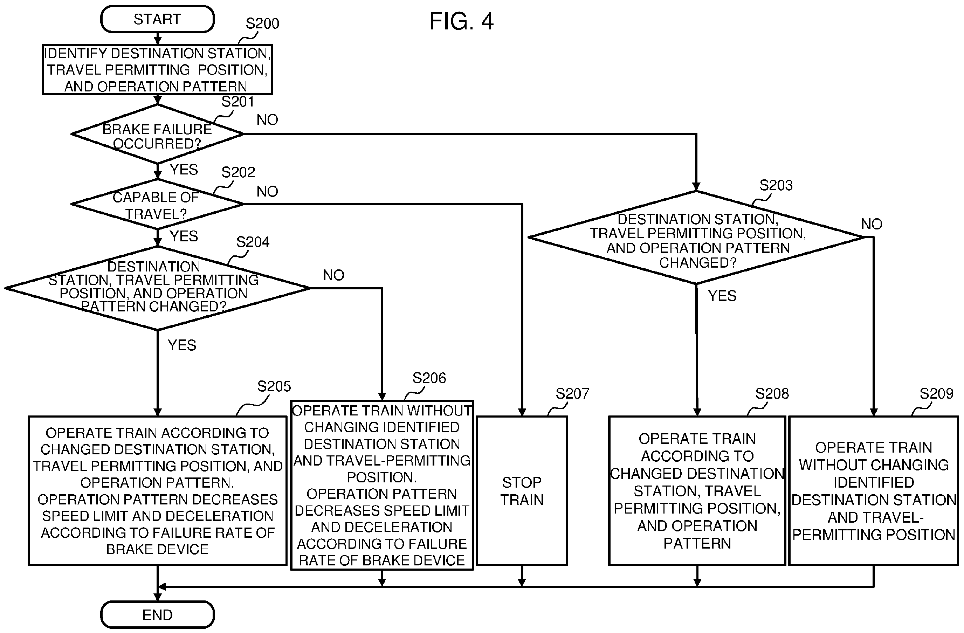

FIG. 4 is a flowchart illustrating an example of an automatic driving process procedure of the onboard control device 110.

At step S200, the onboard control device 110 identifies the current destination station, travel-permitting position, and operation pattern of the train 109. At step S201, the onboard control device 110 determines whether a brake device failure occurs on the train 109. If a brake device failure occurs (step S201: YES), step S202 is executed. If no brake device failure occurs (step S201: NO), step S203 is executed.

At step S202, the onboard control device 110 determines whether the train 109 can travel, specifically, whether the train ensures a sufficient braking force to travel safely, for example. If the train 109 can travel (step S202: YES), at the onboard control device 110, step S204 is executed. If the train cannot run (step S202: NO), step S209 is executed.

At step S203, the onboard control device 110 determines whether the destination station, travel-permitting position, and operation pattern are changed under the condition of no brake device failure. If the destination station, travel-permitting position, and operation pattern are changed (step S203: YES) at the onboard control device 110, step S208 is executed. If the destination station, travel-permitting position, and operation pattern are not changed (step S203: NO), step S209 is executed.

At step S204, the onboard control device 110 determines whether the destination station, travel-permitting position, and operation pattern are changed under the condition of brake device failure. If the destination station, travel-permitting position, and operation pattern are changed (step S204: YES) at the onboard control device 110, step S205 is executed. If the destination station, travel-permitting position, and operation pattern are not changed (step S204: NO), step S206 is executed.

At step S205, the onboard control device 110 identifies the changed destination station, travel-permitting position, and operation pattern, and operates the train 109 according to this operation pattern. The operation pattern decreases the speed limit and the deceleration according to the failure rate of the brake device. After step S205 is executed, the onboard control device 110 terminates the automatic operation process.

At step S206, the onboard control device 110 operates the train 109 without changing the destination station and travel-permitting position. The operation pattern decreases the speed limit and the deceleration according to the failure rate of the brake device. After step S206 is executed, the onboard control device 110 terminates the automatic operation process.

At step S207, the onboard control device 110 determines that the train 109 cannot travel, and then stops the train. After step S207 is executed, the onboard control device 110 terminates the automatic operation process.

At step S208, the onboard control device 110 operates the train 109 according to the identified changed destination station, travel-permitting position, and operation pattern. After step S208 is executed, the onboard control device 110 terminates the automatic operation process.

At step S209, the onboard control device 110 operates the train 109 without changing the destination station, travel-permitting position, and operation pattern. After step S209 is executed, the onboard control device 110 terminates the automatic operation process.

As above, the automatic operation process can change the destination station, travel-permitting position, and operation pattern. The automatic operation is available even in the event of a brake device failure except when the train cannot travel. It is possible to reduce the impact on transportation. When the train cannot travel due to a failure, an emergency stop can ensure the safety of train operations.

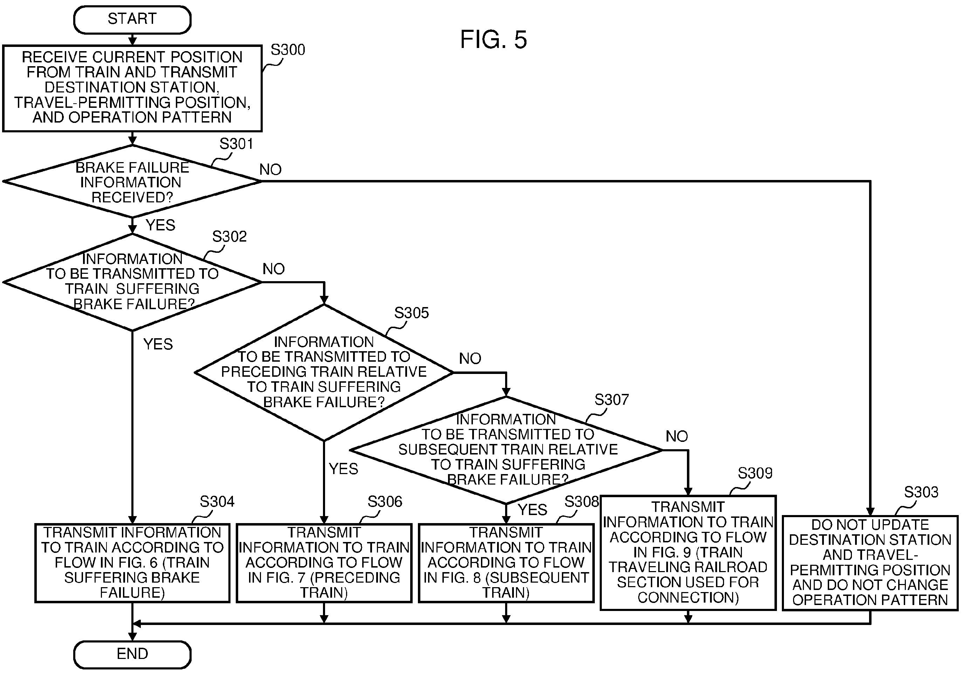

FIG. 5 is a flowchart illustrating an example of an information transmission procedure from the ground control device 100 to the onboard control device 110 when the ground control device receives information indicating an occurrence of brake device failure.

At step S300, the ground control device 100 identifies the current position received from the train 109 and transmits the destination station, travel-permitting position, and operation pattern to the train 109.

At step S301, the ground control device 100 determines whether brake device failure information is received from the train 109. If the brake device failure information is received (step S301: YES) at the onboard control device 110, step S302 is executed. If no brake device failure information is received (step S301: NO), step S303 is executed.

At step S302, the ground control device 100 determines whether the information from the ground control device 100 is to be transmitted to the train 109 that transmitted the brake device failure information. If the information is to be transmitted to the train 109 that transmitted the brake device failure information (S302: YES) at the ground control device, step S304 is executed. If the information is not to be transmitted to the train 109 that transmitted the brake device failure information (step S302: NO), step S305 is executed.

At step S303, the ground control device 100 maintains the current destination station, travel-permitting position, and operation pattern without changing the destination station, travel-permitting position, and operation pattern based on the brake device failure information because no brake device failure information is received. After step S303 is executed, the ground control device 100 terminates the transmission process.

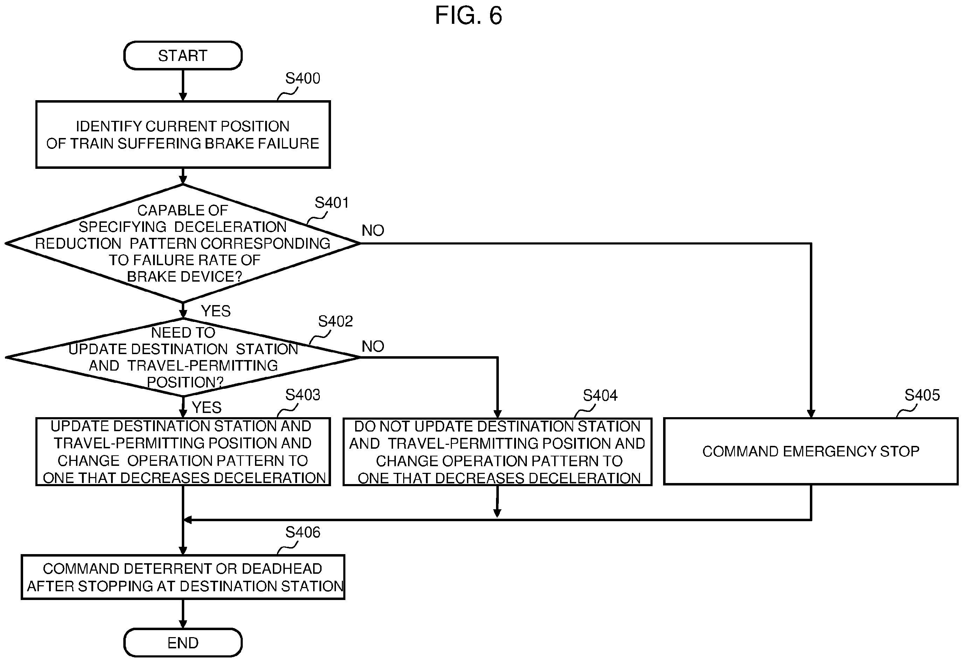

At step S304, the ground control device 100 transmits information to the onboard control device 110 of the train 109 having transmitted the brake device failure information, according to the process flow in FIG. 6 described later. After step S304 is executed, the ground control device 100 terminates the transmission process.

At step S305, the ground control device 100 determines whether the information from the ground control device 100 is to be transmitted to the preceding train relative to the train 109 that transmitted the brake device failure information. If the information is to be transmitted to the preceding train relative to the train 109 that transmitted the brake device failure information (step S305: YES) at the ground control device 100, step S306 is executed. If the information is not to be transmitted to the preceding train (step S305: NO), step S307 is executed.

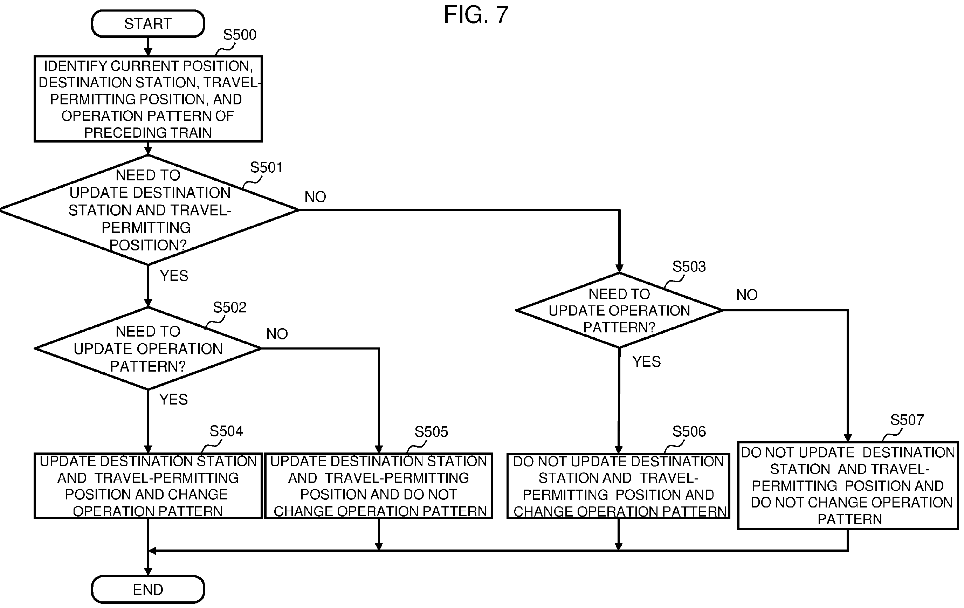

At step S306, the ground control device 100 transmits information to the onboard control device 110 of the preceding train relative to the train 109 that transmitted the brake device failure information, according to the processing flow in FIG. 7. After step S306 is executed, the transmission process terminates.

At step S307, the ground control device 100 determines whether the information from the ground control device 100 is to be transmitted to the subsequent train relative to the train 109 that transmitted the brake device failure information. If the information is to be transmitted to the subsequent train relative to the train 109 that transmitted the brake device failure information (step S307: YES) at the ground control device 100, step S308 is executed. If the information is not to be transmitted to the subsequent train (step S307: NO), step S309 is executed.

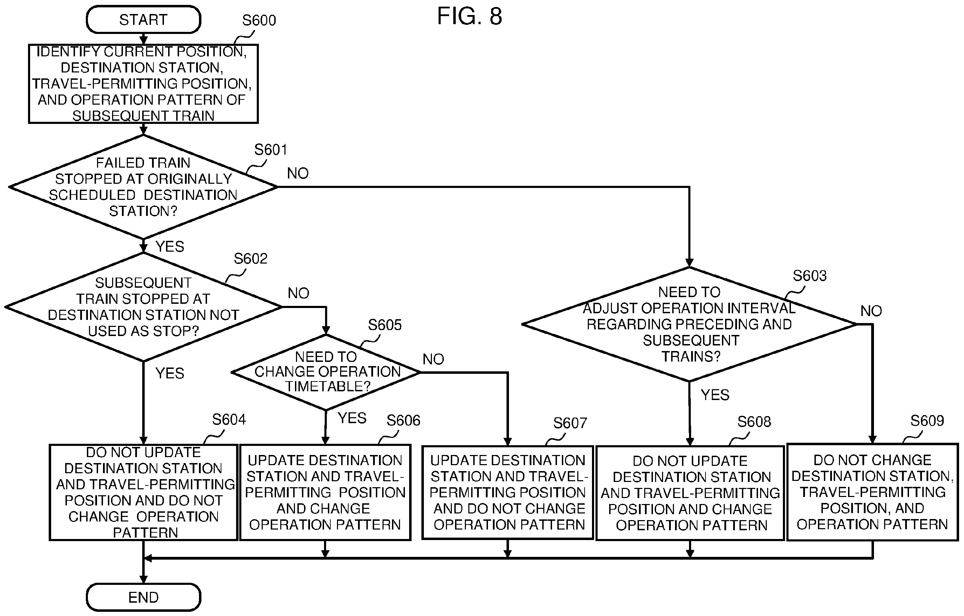

At step S308, the ground control device 100 transmits information to the onboard control device 110 of the subsequent train relative to the train 109 that transmitted the brake device failure information, according to the processing flow in FIG. 8. After step S308 is executed, the ground control device 100 terminates the transmission process.

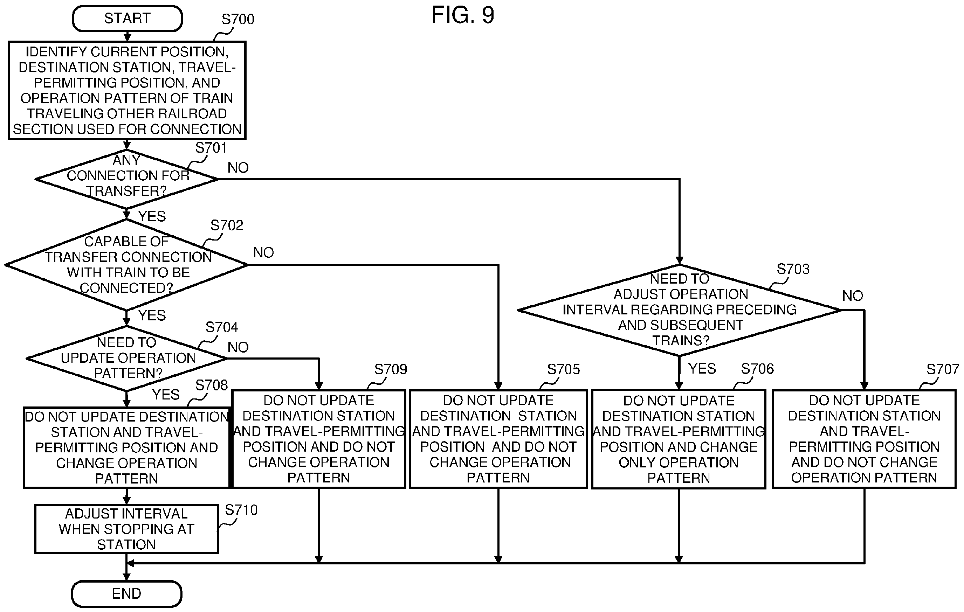

At step S309, the ground control device 100 transmits information to the onboard control device 110 of the train 109 traveling the railroad section used for a transfer connection to the railroad section where the train 109 having transmitted the brake device failure information is traveling, according to the processing flow in FIG. 9. After step S309 is executed, the ground control device 100 terminates the transmission process.

The above-described process transmits information from the ground control device 100 to the onboard control device 110 of each train 109, making it possible to issue commands to trains 109 with a focus on the train 109 that transmitted the brake device failure information.

FIG. 6 is a flowchart illustrating an example of the information transmission process of the ground control device 100 to transmit information to the onboard control device 110 of the train 109 that transmitted brake device failure information.

At step S400, the ground control device 100 identifies the current position of the train 109 that transmitted the brake device failure information.

At step S401, the ground control device 100 determines whether it is possible to specify a deceleration reduction pattern corresponding to the failure rate of the brake device, specifically, whether the train can travel based on the same interstation operation timetable as that for normal operations, for example. If the pattern can be specified (step S401: YES), step S402 is executed. If the pattern cannot be specified (step S401: NO), step S S405 is executed.

At step S402, the ground control device 100 determines whether it is necessary to update the destination station and travel-permitting position of the train 109. If the destination station and the travel-permitting position of the train 109 need to be updated (step S402: YES) at the ground control device 100, step S403 is executed. If the update is unnecessary (step S402: NO), step S404 is executed.

At step S403, the ground control device 100 updates the destination station and the travel-permitting position out of the information to be transmitted from the ground control device 100 to the train 109, and changes the operation pattern to one that decreases the deceleration. After step S403 is executed, at the ground control device 100, step S406 is executed.

At step S404, the ground control device 100 does not update the destination station and the travel-permitting position out of the information to be transmitted from the ground control device 100 to the train 109, and changes the operation pattern to one that decreases the deceleration. After step S404 is executed, at the ground control device 100, step S406 is executed.

At step S405, the ground control device 100 brings the train 109 to an emergency stop. After step S405 is executed, at the ground control device 100, step S406 is executed.

At step S406, the ground control device 100 allows the train 109 to travel to the destination station and then transmits deterrent information to the onboard control device 110 or transmits a new destination station, travel-permitting position, and operation pattern for deadhead to a train depot. After step S406 is executed, the ground control device 100 terminates the transmission process.

Using the above-described transmission process, the ground control device 100 commands the train 109 having transmitted the brake device failure information to determine whether to update the destination station and the travel-permitting position and whether to change the operation pattern. Thus, the train 109 can travel to a position capable of evacuation without disrupting operations and without sending a driver to the train 109. In addition, passengers can leave the train at stations without stopping between stations as long as the train can travel. It is possible to inhibit delays in the railroad section where the train 109 suffering brake device failure travels.

FIG. 7 is a flowchart illustrating an example of the information transmission procedure from the ground control device 100 to the onboard control device 110 of a preceding train 109 that precedes the train having transmitted the information indicating an occurrence of brake device failure.

At step S500, the ground control device 100 identifies the current position, destination station, travel-permitting position, and operation pattern of the preceding train that foregoes the train 109 having transmitted the braking failure information. At step S501, the ground control device 100 determines whether it is necessary to update the destination station and travel-permitting position of the preceding train relative to the train 109 having transmitted the braking failure information. The ground control device 100 determines whether it is necessary to update the destination station and travel-permitting position of the preceding train as follows. When the destination station or travel-permitting position is updated, it is determined whether to increase intervals regarding subsequent trains including the train having transmitted the brake device failure information, or whether the train can travel without increasing congestion due to passing through stations, for example. If the destination station and travel-permitting position need to be updated (step S501: YES) at the ground control device 100, step S502 is executed. If the destination station and travel-permitting position need not be updated (step S501: NO), step S503 is executed.

At step S502, the ground control device 100 determines whether it is necessary to update the operation pattern of the preceding train that foregoes the train 109 having transmitted the brake device failure information. Whether the operation pattern of the preceding train needs to be updated is determined as follows. When the preceding train travels by updating the operation pattern, it is determined whether the train can travel without increasing the operation intervals regarding subsequent trains including the train having transmitted the brake device failure information. If the operation pattern needs to be updated (step S502: YES) at the ground control device 100, step S504 is executed. If the operation pattern need not be updated (step S502: NO), step S505 is executed.

At step S503, the ground control device 100 determines whether it is necessary to update the operation pattern of the preceding train 109 that foregoes the train 109 having transmitted the brake device failure information. The purpose of the determination at step S503 is similar to that at step S502. If the operation pattern needs to be updated (step S503: YES), step S506 is executed. If the operation pattern need not be updated (step S503: NO), step S507 is executed.

At step S504, the ground control device 100 updates the destination station and travel-permitting position and changes the operation pattern out of the information to be transmitted from the ground control device 100 to the preceding train. After step S504 is executed, the ground control device 100 terminates the transmission process.

At step S505, the ground control device 100 updates the destination station and travel-permitting position and does not change the operation pattern out of the information transmitted from the ground control device 100 to the preceding train. After step S505 is executed, the ground control device 100 terminates the transmission process.

At step S506, the ground control device 100 changes the operation pattern and does not update the destination station and travel-permitting position out of the information transmitted from the ground control device 100 to the preceding train. After step S506 is executed, the ground control device 100 terminates the transmission process.

At step S507, the ground control device 100 does not update the destination station and travel-permitting position and does not change the operation pattern out of the information transmitted from the ground control device 100 to the preceding train. After step S507 is executed, the ground control device 100 terminates the transmission process.

Using the above-described process, the ground control device 100 commands the train preceding train foregoing the train 109 having transmitted the brake device failure information to determine whether to update the destination station and the travel-permitting position and whether to change the operation pattern. The train preceding the train having transmitted the brake device failure information can inhibit the operation interval regarding the subsequent train from increasing. The train having transmitted the brake device failure information may cancel operation at a destination station before reaching the scheduled destination station. In this case, the preceding train can stop at the destination station where the train having transmitted the brake device failure information is scheduled to stop. It is possible to prevent inconvenience to passengers at the station where the train was scheduled to stop.

FIG. 8 is a flowchart illustrating an example of the information transmission procedure from the ground control device 100 to the onboard control device 110 of a subsequent train 109 that follows the train having transmitted the information indicating an occurrence of brake device failure.

At step S600, the ground control device 100 identifies the current position, destination station, travel-permitting position, and operation pattern of the subsequent train following the train having transmitted the brake device failure information.

At step S601, the ground control device 100 determines whether the train 109 having transmitted the brake device failure information stopped at the originally scheduled destination station. If the train stopped at the originally scheduled destination station (step S601: YES) at the ground control device 100, step S602 is executed. If the train did not stop as scheduled (step S601: NO), step S603 is executed.

At step S602, the train 109 having transmitted the brake device failure information may have passed the originally scheduled destination station or may have not stopped at the same due to cancellation of the operation at the ground control device 100. The ground control device 100 determines whether any of the subsequent trains following the train 109 have stopped at the destination station where the train 109 was scheduled to stop. If any of the subsequent trains have stopped at the destination station where the train 109 was scheduled to stop (step S602: YES) at the ground control device 100, step S604 is executed. If none of the subsequent trains has stopped at the same (step S602: NO), step S605 is executed.

At step S603, the ground control device 100 determines whether the operation interval needs to be adjusted due to a difference in the scheduled operation interval referring to a train traveling before or after the train subsequent to the train 109 having transmitted the brake device failure information. If the operation interval differs from the schedule (step S603: YES) at the ground control device 100, step S608 is executed. If the operation interval remains scheduled (step S603: NO), step S609 is executed.

At step S604, the ground control device 100 does not update the destination station and travel-permitting position and does not change the operation pattern out of the information transmitted from the ground control device 100 to the subsequent train due to the completion of service to passengers at the originally scheduled destination station. After step S604 is executed, the ground control device 100 terminates the transmission process.

At step S605, the ground control device 100 determines whether the operation pattern of the subsequent train needs to be changed due to a delay caused by the fact that the subsequent train following the train 109 having transmitted the brake device failure information stops at a station where the train 109 having transmitted the brake device failure information was originally scheduled to stop. If the operation pattern needs to be changed (step S605: YES) at the ground control device 100, step S606 is executed. If the operation pattern need not be changed (step S605: NO), step S607 is executed.

At step S606, the ground control device 100 updates the destination station and travel-permitting position and changes the operation pattern out of the information to be transmitted from the ground control device 100 to the subsequent train due to a delay occurring when the subsequent train stops at the station where the train 109 having transmitted the brake device failure information was originally scheduled to stop. After step S606 is executed, the ground control device 100 terminates the transmission process.

At step S607, the ground control device 100 updates the destination station and travel-permitting position but does not change the operation pattern out of the information to be transmitted from the ground control device 100 to the subsequent train because the subsequent train stops at the station where the train 109 having transmitted the brake device failure information was originally scheduled to stop, but no delay occurs. After step S607 is executed, the ground control device 100 terminates the transmission process.

At step S608, the ground control device 100 does not update the destination station and travel-permitting position and only changes the operation pattern out of the information to be transmitted from the ground control device 100 to the subsequent train because the subsequent train does not need to stop at the station where the train 109 having transmitted the brake device failure information was originally scheduled to stop, but it is necessary to adjust the operation interval regarding a train traveling before or after the subsequent train. After step S608 is executed, the ground control device 100 terminates the transmission process.

At step S609, the ground control device 100 does not update the destination station and travel-permitting position and does not change the operation pattern out of the information to be transmitted from the ground control device 100 to the subsequent train because the subsequent train need not stop at the station where train 109 having transmitted the brake device failure information was originally scheduled to stop and there is no need to adjust the operation interval regarding a train traveling before or after the subsequent train. After step S609 is executed, the ground control device 100 terminates the transmission process.

Using the above-described process, the ground control device 100 commands the subsequent train after the train 109 having transmitted the brake device failure information to determine whether to update the destination station and travel-permitting position and whether to change the operation pattern. It is possible to stop the subsequent train at the station where the train 109 having transmitted the brake device failure information was originally scheduled to stop and ensure service to passengers who were scheduled to board. The operation timetable can be adjusted to resolve disruption to train services and eliminate passenger congestion based on equal operation intervals.

FIG. 9 is a flowchart illustrating an example of the information transmission process procedure from the ground control device 100 to the onboard control device 110 of a train traveling a railroad section connected to the railroad section traveled by the train 109 having transmitted the information indicating an occurrence of brake device failure.

At step S700, the ground control device 100 identifies the current position, destination station, travel-permitting position, and operation pattern of a train (hereinafter referred to as a "connection train") traveling a railroad section connected to the railroad section where the train 109 (hereinafter referred to as the "failed train") that transmitted the brake device failure information.

Next, at step S701, the ground control device 100 determines whether there is a connection train that is scheduled to transfer to the train 109 traveling the same railroad section as that of the failed train. If there is a connection train (step S701: YES) at the ground control device 100, step S702 is executed. If there is no connection train (step S701: NO), step S703 is executed.

At step S702, the ground control device 100 determines whether it is possible to connect to the connection train that travels the railroad section where the failed train travels, and is scheduled to connect for transfer. If it is possible to connect to the scheduled connection train (step S702: YES) at the ground control device 100, step S704 is executed. If it is impossible to connect to the scheduled connection train (step S702: NO), step S705 is executed.

At step S703, the ground control device 100 determines whether it is necessary to adjust the operation interval between the connection train and a train traveling before and after the connection train due to a difference in the scheduled operation interval therebetween. If the operation interval differs from the schedule (step S703: YES) at the ground control device 100, step S706 is executed. If the operation interval remains scheduled (step S703: NO), step S707 is executed.

At step S704, the ground control device 100 determines whether it is necessary to change the operation pattern of the connection train to connect with the failed train scheduled for transfer. If it is necessary to change the operation pattern of the connection train (step S708: YES) at the ground control device 100, step S708 is executed. If it is possible to connect for transfer without changing the operation pattern (step S708: NO), step S709 is executed.

At step S705, the ground control device 100 does not make a connection nor change the operation pattern because the connection train scheduled for transfer departs the destination station scheduled for connection or becomes delayed to cause waiting for connection, causing disruption to train services for the railroad section to be connected. After step S705 is executed, the ground control device 100 terminates the transmission process.

At step S706, the ground control device 100 does not update the destination station and travel-permitting position but changes only the operation pattern out of the information transmitted from the ground control device 100 to the connection train because the connection train needs to adjust the operation interval regarding a train traveling before or after the connection train. After step S706 is executed, the ground control device 100 terminates the transmission process.

At step S707, the ground control device 100 does not update the destination station and travel-permitting position nor change the operation pattern out of the information transmitted from the ground control device 100 to the connection train because the connection train does not require adjusting the operation interval regarding a train traveling before or after the connection train. After step S707 is executed, the ground control device 100 terminates the transmission process.

At step S708, the ground control device 100 does not update the destination station and travel-permitting position and changes only the operation pattern out of the information transmitted from the ground control device 100 to the connection train because the connection with the connection train scheduled for transfer requires a change in the operation timetable due to the change in the operation pattern. After step S708 is executed, at the ground control device 100, step S710 is executed.

At step S709, the ground control device 100 does not update the destination station and travel-permitting position, nor change the operation pattern out of the information transmitted from the ground control device 100 to the connection train because it is possible to connect with the connection train scheduled for transfer without changing the operation pattern. After step S709 is executed, the ground control device 100 terminates the transmission process.

At step S710, the ground control device 100 adjusts the interval when a train waiting for a connection stops at the destination station to wait for connection with the train scheduled for transfer. After step S710 is executed, the ground control device 100 terminates the transmission process.

Using the above-described process, the ground control device 100 commands the connection train 109 whether to update the destination station and travel permitting position and whether to change the operation pattern. It is possible to make a connection to the train scheduled for connection without disruption to train services.

According to the above-described embodiment, the ground control device receives failure information including the failure rate of the brake device and the current position from the onboard control device of the failed train whose brake device fails. The ground control device searches the database for an appropriate train operation pattern (target run curve) and an operation timetable capable of travel based on the relationship among the failure rate of the brake device, the train speed limit, and the reduction rate of deceleration. The ground control device thereby selects an operation pattern in consideration of the failure rate of the brake device. The ground control device outputs operation commands or emergency stop commands including destination stations, travelable positions, and operation patterns to the onboard control devices of the failed train, the preceding and subsequent trains relative to the failed train, and each train traveling the railroad section connecting with a train traveling the same railroad section as that of the failed train so that each train can travel and maintain the optimal operation interval.

The above-described embodiment can resolve train delays and inhibit impacts on passengers while continuing safe operation when a failed train whose brake device fails provides services. The travel-permitting position, destination station, and operation pattern can be updated for the failed train, preceding train, subsequent train, and connection train according to the current positions and operation situations. Thus, it is possible to automatically operate the trains similarly to normal brake conditions while reducing train schedule disruptions and impacts on passenger movement.

The description below explains some modifications. The present invention may further combine the modifications.

The ground control device 100 may control (visual or audible) outputs of the current position of the failed train suffering brake device failure, the capability of loading or unloading failed train passengers, or the delay time of the failed train from an output device in the station where the failed train is scheduled to stop, an output device in the failed train, or an output device in the traffic control system. It is possible to allow passengers who are on board or are scheduled to board the failed train, and the operation system manager at a vehicle direction center to understand the situation of the failed train and take appropriate action.

Suppose the failed train suffering brake device failure arrives at a travel-permitting position or a specified destination station and a rail yard is located nearby within a specified distance such as a range in which the failed train can travel. In this case, the ground control device 100 may command the onboard control device 110 of the failed train to deadhead the failed train to the rail yard. As a result, the failed train can be deadheaded to the rail yard according to the command and can undergo repairs, for example.

The ground control device 100 may control (visual or audible) outputs of the failure rate of a failed train suffering brake device failure, the location of the failed brake device in the train, or the operation pattern from an output device of the onboard control device 110 in the failed train, an output device of the traffic control system, or an output device of the rail yard. The driver of the failed train, the operation system manager at the vehicle direction center, or the inspection staff of the rail yard can understand the situation of the failed train and take appropriate action.

Instead of the ground control device 100, the onboard control device 110 of the failed train may select and change the operation pattern of the failed train suffering brake device failure, and calculate the abnormal-state speed limit and the abnormal-state brake force. In this case, the onboard control device 110 includes a database previously storing multiple operation pattern candidates and acquires operation pattern candidates from the database. Alternatively, the onboard control device 110 acquires operation pattern candidates from the ground control device 100 as necessary. The onboard control device 110 selects an operation pattern from the operation pattern candidates based on steps S300, S301, S303, and S304 in FIG. 5 (processing flow in FIG. 5) without performing the processes corresponding to steps S302 and S305 through S309.

The operation pattern is not necessarily selected based on the failure rate but may be selected based on the failure rate and the train occupancy acquired from the onboard control device 110. Even if the brake device fails, the train may be able to continue traveling depending on the train occupancy. Then, the brake force (torque) in an abnormal state is calculated based on a combination of the brake device failure rate and the train occupancy. The brake force in a normal state, free from a brake device failure on the train, is changed to the brake force in an abnormal state. The corresponding operation pattern is selected based on the brake force in the abnormal state. The operation pattern can be determined in consideration of the failure rate and the train occupancy. The ground control device 100 or the onboard control device 110 may calculate the brake force in an abnormal state and select the operation pattern corresponding to the brake force in an abnormal state.

The processes described in the embodiment may be performed based on not only the failure rate of the brake device of the train but also the failure rate and the train occupancy. For example, the determination on whether to travel at step S202 in FIG. 4, the process of decreasing the speed limit and deceleration according to the failure rate of the brake device at steps S205 and S206, and the determination at step S401 in FIG. 6 may be performed based on the failure rate of the brake device and the train occupancy.

The traffic control system connected to the ground control device may update the travel-permitting position and destination station based on the train schedule information. As above, the brake device failure information is received from the information management device. Instead, the onboard control device may monitor whether the required brake torque is generated, and detect a brake device failure when the brake torque is less than or equal to that required. Alternatively, a brake device failure may be detected when the deceleration to brake the operating train falls below a predetermined threshold.

The present invention is not limited to the above-described embodiment and includes various modifications and can be variously changed and modified by those skilled in the art within the scope of technological thinking disclosed in the invention. The above-described embodiment provides examples to easily explain the present invention and is not necessarily limited to an entity composed of all the configurations described in the embodiment. It is possible to add, delete, or replace part of the configurations of the above-described embodiment with other configurations.

### List of Reference Signs

S: train control system, 100: ground control device, 109: train, 110: onboard control device

## Claims

1. A train control system comprising:
an onboard control device that is mounted on a train moving on a track and controls the train; and
a ground control device that is placed on the ground and controls the train along with the onboard control device,
wherein the onboard control device and the ground control device can cooperate via intercommunication,
wherein the onboard control device includes:
a position acquisition portion that acquires a current position of the train; and
an onboard control portion that transmits the current position of the train acquired by the position acquisition portion to the ground control device, receives, from the ground control device, a travelable route of the train based on the current position and a travel-permitting position indicating a position enabling the train to travel within the travelable route, and controls the train to maintain a speed lower than or equal to a predetermined limit based on an operation pattern indicating a control pattern of the train referring to the travel-permitting position,
wherein the ground control device includes a ground control portion that receives the current position from the onboard control device, calculates the travelable route based on the current position and the travel-permitting position, and transmits the travel-permitting position to the onboard control device, and
wherein the onboard control portion monitors states of brake devices installed on the train, calculates a failure rate, namely, a ratio of failed brake devices to the brake devices, and controls the train to maintain a speed lower than or equal to an abnormal-state speed limit, namely, a speed calculated based on the failure rate and a normal-state speed limit as a speed limit for the train when all the brake devices are normal.

2. The train control system according to claim 1,
wherein the onboard control portion changes a vehicle braking force of the train from a normal-state brake, namely, a braking force free from a failure of the brake device, to an abnormal-state brake force calculated based on the normal-state brake force and the failure rate.

3. The train control system according to claim 2,
wherein a device to calculate the abnormal-state speed limit and the abnormal-state brake force is the ground control device,
wherein the ground control portion selects selectable operation patterns from a plurality of previously stored operation pattern candidates based on the abnormal-state speed limit and the abnormal-state brake force and determines, from among selected candidates, an operation pattern most approximate to an operation pattern based on the normal-state speed limit and the normal-state brake force, and
wherein the onboard control device controls the train to maintain a speed lower than or equal to the abnormal-state speed limit based on the operation pattern determined by the ground control portion.

4. The train control system according to claim 2,
wherein a device to calculate the abnormal-state speed limit and the abnormal-state brake force is the onboard control device, and
wherein the onboard control portion selects selectable operation patterns from among a plurality of previously stored operation pattern candidates based on the abnormal-state speed limit and the abnormal-state brake force, determines, from among selected candidates, an operation pattern most approximate to an operation pattern based on the normal-state speed limit and the normal-state brake force, and controls the train to maintain a speed lower than or equal to the abnormal-state speed limit based on the determined operation pattern.

5. The train control system according to claim 3 or 4,
wherein the device determines whether the train can travel based on the failure rate, and determines to bring the train to an emergency stop when it is determined that the train is incapable of traveling, and
wherein the onboard control device brings the train to an emergency stop according to the determination.

6. The train control system according to any one of claims 1 through 5,
wherein the ground control device calculates the travelable route and the travel-permitting position corresponding to the travelable route for the failed train to stop or deadhead the failed train after completion of service to passengers at any station and transmits the calculated travelable route and travel-permitting position to the onboard control device of the failed train suffering brake device failure.

7. The train control system according to any one of claims 1 to 6,
wherein the ground control device calculates: a travelable route for a train free from hindrance to loading or unloading passengers at a given station; and a travel-permitting position corresponding to the travelable route and transmits the calculated travelable route and travel-permitting position to the onboard control device of the train other than the failed train suffering brake device failure.

8. The train control system according to any one of claims 1 through 7,
wherein the ground control device selects the operation pattern to adjust an operation timetable of a train and transmits the selected operation pattern to the onboard control device of the train other than the failed train suffering brake device failure.

9. The train control system according to any one of claims 1 through 8,
wherein the ground control device controls the output of a current position of the failed train suffering brake device failure, the capability of loading or unloading failed train passengers, or the delay time of the failed train, from an output device in a given station, an output device in the failed train, or an output device of the traffic control system.

10. The train control system according to any one of claims 1 through 9,
wherein, when the failed train suffering brake device failure arrives at the travel-permitting position or a given destination station and a rail yard is located nearby within a specified distance, the ground control device commands the onboard control device of the failed train to deadhead the failed train to the rail yard.

11. The train control system according to any one of claims 1 through 10,
wherein the ground control device controls the output of the failure rate, a failure location, or the operation pattern of the failed train suffering brake device failure, from an output device of the onboard control device in the failed train, an output device of the traffic control system, or an output device of a rail yard.

12. The onboard control device according to any one of claims 1 to 11.

13. A train control method provided by a train control system capable of intercommunication-based cooperation between an onboard control device that is mounted on a train moving on a track and controls the train; and a ground control device that is placed on the ground and controls the train along with the onboard control device, comprising:
allowing the onboard control device to acquire a current position of the train, transmit the acquired current position of the train to the ground control device, receive, from the ground control device, a travelable route of the train based on the current position, and a travel-permitting position indicating a position enabling the train to travel within the travelable route, controls the train to maintain a speed lower than or equal to a predetermined limit based on an operation pattern indicating a control pattern of the train referring to the travel-permitting position;
allowing the ground control device to receive the current position from the onboard control device, calculate the travelable route and the travel-permitting position based on the current position, and transmit the travel-permitting position to the onboard control device; and
allowing the onboard control device to monitor states of brake devices installed on the train, calculate a failure rate, namely, a ratio of failed brake devices to the brake devices, and control the train to maintain a speed lower than or equal to an abnormal-state speed limit, namely, a speed calculated based on the failure rate and a normal-state speed limit as a speed limit for the train when all the brake devices are normal.
